# FASCICULE DE BREVET EUROPEEN

(11) **EP 2 989 625 B1**
(45) Date de publication et mention de la délivrance du brevet: **15.02.2017**
(21) Numéro de dépôt: 14727587.9
(22) Date de dépôt: 23.04.2014
(51) Int. Cl.: G09F 9/33, B64D 47/00, G09F 21/10

(54) **DISPOSITIF POUR L'AFFICHAGE D'UN MESSAGE LUMINEUX SUR LE CARÉNAGE D'UN AÉRONEF**
VORRICHTUNG ZUR ANZEIGE EINER LICHTNACHRICHT AUF DER AUSSENFLÄCHE EINES FLUGZEUGS
DEVICE FOR DISPLAYING A LIGHT MESSAGE ON THE FAIRING OF AN AIRCRAFT

(30) Priorité: 26.04.2013 FR 1353877
(43) Date de publication de la demande: 02.03.2016
(73) Titulaire: Safran Nacelles, 76700 Gonfreville-l'Orcher (FR)
(72) Inventeur: MARCHETTI, Christophe, F-31480 Caubiac (FR); REBIERE-DESVEAUX, Jérôme, F-31150 Gratentour (FR); RIERE, Serge, F-31770 Colomiers (FR)
(74) Mandataire: Gaillarde, Frédéric F. Ch.
(86) Numéro de dépôt international: PCT/FR2014/050982
(87) Numéro de publication internationale: WO 2014/174211

(56) Documents cités:
- EP-A2- 2 549 329
- WO-A1-2005/025275
- WO-A2-2009/064219
- WO-A2-2012/138118
- DE-U1-202006 011 786
- FR-A1- 2 935 828

## Description

L'invention concerne un dispositif pour l'affichage d'un message lumineux sur le carénage d'un aéronef.

Il est connu d'apposer sur le carénage d'un aéronef un message signalétique, comme un numéro d'immatriculation.

Le document WO2010025490 propose des systèmes d'affichage lumineux sur le carénage d'un aéronef.

On entend par carénage la paroi extérieure, ou l'enveloppe, de l'aéronef au sens large, ce qui comprend aussi bien la paroi extérieure d'une nacelle de turbomachine que la paroi extérieure d'un aileron de l'aéronef par exemple.

L'affichage de ce type de message est généralement réalisé au moyen d'un film autocollant plaqué sur le carénage de l'aéronef, ou au moyen d'un dessin réalisé à la peinture directement sur le carénage.

Un inconvénient de ce type de message, qui est destiné à être discernable depuis l'extérieur de l'aéronef, est qu'il n'est visible que lorsque certaines conditions de visibilité sont remplies.

En effet, par temps brumeux, pluvieux ou de nuit, le message risque d'être mal perçu ou non visible.

L'invention vise notamment à proposer un dispositif permettant à ce type de message d'être vu depuis l'extérieur de l'aéronef, quelles que soient les conditions de visibilité.

Dans ce but, l'invention propose un dispositif pour l'affichage d'un message lumineux sur le carénage d'un aéronef selon les caractéristiques de la revendication 1. Il comporte :
- au moins une feuille électroluminescente plaquée sur le carénage,
- un moyen de fixation de la feuille électroluminescente sur le carénage,
- un moyen d'alimentation en électricité de la feuille électroluminescente,
- un moyen de raccordement électrique de la feuille électroluminescente sur le moyen d'alimentation en électricité, et
- un moyen de commande de la feuille électroluminescente dans un état allumé dans lequel la feuille électroluminescente est alimentée électriquement et émet de la lumière, ou dans un état éteint dans lequel la feuille électroluminescente est inopérante.

Ainsi, le dispositif selon l'invention permet de rendre visible le message affiché sur le carénage de l'aéronef quelles que soient les conditions de visibilité.

Le carénage comporte successivement, depuis l'intérieur vers l'extérieur de l'aéronef :
- un plaque formant substrat de support,
- un premier étage de revêtement,
- un second étage pour l'affichage du message comprenant la feuille électroluminescente et le moyen de fixation associé,
- une couche de protection extérieure.

Le second étage pour l'affichage du message présente une épaisseur la plus faible possible, pour limiter la surépaisseur formée sur le carénage.

Dans ce but, la feuille électroluminescente est dépourvue de protection, la protection étant assurée par la couche de protection extérieure appliquée sur le carénage à la suite de la fixation de la feuille électroluminescente.

Plus particulièrement, la couche de protection est un vernis transparent de protection contre les rayons ultra-violets.

Selon un autre aspect, la feuille électroluminescente est découpée suivant la forme du message lumineux à afficher.

Aussi, le moyen de fixation de la feuille électroluminescente est constitué d'un film adhésif.

En outre, le moyen d'alimentation en électricité est agencé à l'intérieur de l'aéronef, et le moyen de raccordement électrique de la feuille électroluminescente comporte au moins deux fils électriques qui raccordent électriquement la feuille électroluminescente et le moyen d'alimentation en électricité, et qui passent à travers au moins un trou ménagé dans le carénage de l'aéronef.

Avantageusement, la feuille électroluminescente affiche un message signalétique.

De même, la feuille électroluminescente peut aussi afficher un message publicitaire.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble de côté, qui illustre un aéronef comportant une nacelle de turbomachine équipée d'un dispositif d'affichage d'un message lumineux selon l'invention ;
- la figure 2 est une vue de détail en perspective, qui illustre la nacelle de la figure 1 équipée du dispositif d'affichage ;
- la figure 3 est une vue schématique de détail en section selon la ligne 3-3 de la figure 2, qui illustre l'agencement de la feuille électroluminescente du dispositif d'affichage sur la nacelle.

Dans la description et les revendications, pour clarifier la description et les revendications, on adoptera à titre non limitatif la terminologie longitudinal, vertical et transversal en référence au trièdre L, V, T indiqué aux figures.

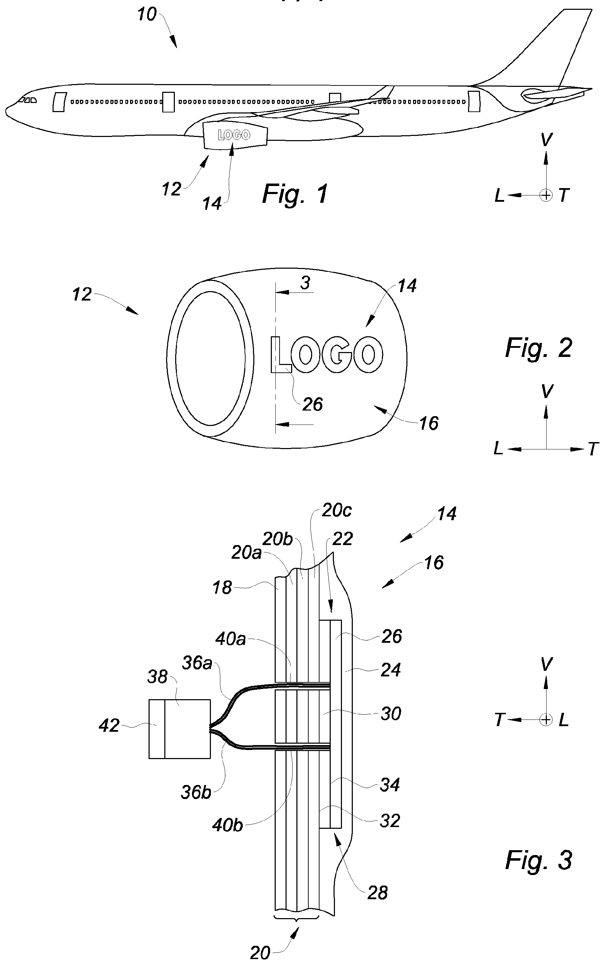

On a représenté à la figure 1 un aéronef 10 comportant une nacelle 12 de turbomachine qui est équipée d'un dispositif 14 pour l'affichage d'un message lumineux sur le carénage 16 de l'aéronef 10.

Le terme « carénage » désigne ici la paroi extérieure, ou l'enveloppe, de l'aéronef 10 au sens large, ce qui comprend aussi bien la paroi extérieure de la nacelle 12 que la paroi extérieure d'un aileron de l'aéronef 10 par exemple.

Comme on peut le voir sur le schéma de la figure 3, le carénage 16 de la nacelle 12 est constitué, depuis l'intérieur vers l'extérieur de la nacelle 12, d'une plaque 18 formant substrat de support, d'un premier étage 20 de revêtement, d'un second étage 22 pour l'affichage du message et d'une couche de protection 24 extérieure.

La plaque 18 est ici réalisée en alliage de carbone. Toutefois, à titre non limitatif, la plaque 18 peut être réalisée en tôle métallique d'aluminium par exemple ou tout autre support adapté.

Le premier étage 20 de revêtement est constitué d'une première couche 20a de peinture de protection, d'une seconde couche 20b de peinture de support et d'une troisième couche 20c de peinture de finition.

La première couche 20a permet notamment de protéger la plaque 18 de la corrosion et des agressions extérieures. Elle est constituée d'une couche de peinture à base de polymère époxyde par exemple.

La seconde couche 20b est une couche de peinture formant une base de peinture de teinte uniforme destinée à supporter la troisième couche 20c de peinture de finition.

Le second étage 22 comporte quatre feuilles électroluminescentes 26 appartenant au dispositif 14 d'affichage, qui sont chacune fixées sur le carénage 16 par un moyen de fixation 28.

Chaque feuille électroluminescente 26 forme un élément isolé du message à afficher.

Le message à afficher est le mot « LOGO » selon l'exemple de réalisation décrit ici, chaque lettre de ce message formant un élément isolé, c'est-à-dire un élément qui n'est pas lié avec un élément voisin.

Le message à afficher peut être un logo publicitaire, ou un message signalétique ou tout autre type de message visuel.

Les feuilles électroluminescentes 26 sont découpées suivant la forme du message lumineux à afficher.

Selon l'exemple décrit ici, chaque feuille électroluminescente 26 est découpée de façon à délimiter une lettre du message à afficher.

Pour faciliter la compréhension de la description, seule la feuille électroluminescente 26 représentant la première lettre « L » du message, représentée schématiquement en section à la figure 3, et appelée « feuille électroluminescente 26 » par la suite, est décrite en détail dans la suite de la description.

La feuille électroluminescente 26 se présente sous la forme d'un film souple d'une épaisseur la plus fine possible, pour limiter la surépaisseur formée sur le carénage 16 de l'aéronef 10.

A cet effet, la feuille électroluminescente 26 est dépourvue de film de protection contre les rayons ultra-violets habituellement présent, grâce à quoi la feuille électroluminescente 26 présente une épaisseur d'environ deux cents micromètres.

De plus, le moyen de fixation 28 associé à la feuille électroluminescente 26 est constitué d'un film adhésif 30 souple du type dit « double face » qui est recouvert de colle sur chacune de ses faces, une première face 32 étant collée sur la troisième couche 20c de finition du premier étage 20 de revêtement et une seconde face 34 étant collée sur la feuille électroluminescente 26.

Le film adhésif 30 présente une épaisseur d'environ cent micromètres, de sorte que l'ensemble constitué par le film adhésif 30 et la feuille électroluminescente 26 présente une faible épaisseur de trois cents micromètres.

Toutefois, selon une variante de réalisation, le moyen de fixation 28 peut être réalisé par projection d'une colle sous forme d'aérosol sur le premier étage 20 de revêtement du carénage 16.

Enfin, la couche de protection 24 est une couche de vernis de protection transparent, qui est appliqué sur le carénage 16 pour recouvrir la feuille électroluminescente 26 et la troisième couche 20c de peinture de finition.

Cette couche de protection 24 permet de protéger feuille électroluminescente 26 et la troisième couche 20c de peinture de finition, notamment contre les intempéries et les rayons ultra-violets.

Le vernis utilisé pour former la couche de protection 24 présente ici une épaisseur d'environ soixante-dix micromètres.

Selon un autre aspect, le dispositif d'affichage 14 comporte un premier fil 36a et un second fil 36b formant moyen de raccordement électrique pour relier électriquement la feuille électroluminescente 26 sur un moyen d'alimentation 38 en électricité associé.

En référence à la figure 3, chaque fil 36a, 36b comporte une première extrémité reliée électriquement sur la feuille électroluminescente 26 et une seconde extrémité reliée électriquement sur le moyen d'alimentation 38 associé.

A cet effet, un premier perçage 40a et un second perçage 40b sont ménagés dans le carénage 16 à travers la plaque 18, le premier étage 20 de revêtement et le moyen de fixation 28 de la feuille électroluminescente 26, pour le passage du premier fil 36a et du second fil 36b respectivement.

Le moyen d'alimentation 38 est une source de courant continu qui est agencée à l'intérieur de l'aéronef 10 et qui délivre une tension de douze à cent dix Volts. Le moyen d'alimentation 38 est ici constitué par un des réseaux de courant continu qui équipe habituellement l'aéronef 10.

Toutefois, le moyen d'alimentation 38 peut être constitué par une source d'énergie électrique indépendante, comme une batterie électrique par exemple.

De plus, le dispositif d'affichage 14 comporte un moyen de commande 42 de la feuille électroluminescente 26 dans un état allumé dans lequel la feuille électroluminescente 26 est alimentée électriquement de façon à émettre de la lumière, ou dans un état éteint dans lequel la feuille électroluminescente 26 est éteinte.

Ainsi, lorsque la feuille électroluminescente 26 occupe son état allumé, le message dessiné par la feuille électroluminescente 26 est visible sur le carénage 16 de l'aéronef 10 même dans des conditions de faible visibilité et/ou de faible luminosité.

Le moyen de commande 42 peut être piloté par un membre de l'équipage de l'aéronef 10 par exemple, via une interface homme-machine.

Selon une variante de réalisation non représentée, une réservation est ménagée dans la deuxième couche 20b de peinture de support et la troisième couche 20c de peinture de finition, par exemple au moyen d'un pochoir.

La réservation est de la forme du message à afficher et des feuilles électroluminescentes 26 pour délimiter un logement dans lequel les feuilles électroluminescentes sont fixées par le moyen de fixation 28.

Cette variante de réalisation permet de limiter la surépaisseur formée sur le carénage 16 par l'ensemble constitué par les feuilles électroluminescente 26 et le moyen de fixation 28 associé.

Chaque feuille électroluminescente 26 peut utiliser la technologie des diodes électroluminescentes organiques, connue sous l'acronyme OLED.

## Revendications

1. Aéronef (10) comportant un dispositif (14) pour l'affichage d'un message lumineux sur le carénage (16) de l'aéronef (10), **caractérisé en ce qu'**il comporte :
- au moins une feuille électroluminescente (26) se présentant sous la forme d'un film souple, plaquée sur le carénage (16),
- un moyen de fixation (28) de la feuille électroluminescente (26) sur le carénage (16),
- un moyen d'alimentation (38) en électricité de la feuille électroluminescente (26),
- un moyen de raccordement électrique (36a, 36b) de la feuille électroluminescente (26) sur le moyen d'alimentation (38) en électricité, et
- un moyen de commande (42) de la feuille électroluminescente (26) dans un état allumé dans lequel la feuille électroluminescente (26) est alimentée électriquement et émet de la lumière, ou dans un état éteint dans lequel la feuille électroluminescente (26) est inopérante ;
et **caractérisé en ce que** le carénage (16) comporte successivement, depuis l'intérieur vers l'extérieur de l'aéronef (10) :
- un plaque (18) formant substrat de support,
- un premier étage (20) de revêtement constitué d'une première couche (20a) de peinture de protection d'une seconde couche (20b) de peinture de support et d'une troisième couche (20c) de peinture de finition,
- un second étage (22) pour l'affichage du message comprenant la feuille électroluminescente et le moyen de fixation associé, la feuille électroluminescente (26) étant dépourvue de film de protection contre les rayons ultra-violets ;
- une couche de protection (24) extérieure, la couche de protection (24) étant un vernis transparent de protection contre les rayons ultra-violets, la couche de protection (24) étant appliquée sur le carénage (16) de l'aéronef (10) pour recouvrir la feuille électroluminescente (26) et la couche (20c) de peinture de finition.

2. Aéronef (10) selon la revendication 1, **caractérisé en ce qu'**une réservation est ménagée dans la couche (20b) de peinture de support et la couche (20c) de peinture de finition, par exemple au moyen d'un pochoir.

3. Aéronef (10) selon la revendication précédente, **caractérisé en ce que** la réservation est de la forme du message à afficher et de la (ou les) feuille(s) électroluminescente(s) (26) pour délimiter un logement dans lequel la (ou les) feuille(s) électroluminescente(s) (26) est (sont) fixée(s) par le moyen de fixation (28).

4. Aéronef (10) selon l'une des revendications précédentes, **caractérisé en ce que** la feuille électroluminescente (26) présente une épaisseur d'environ 200 micromètres.

5. Aéronef (10) selon l'une quelconque des revendications précédentes, **caractérisé en ce que** la feuille électroluminescente (26) est découpée suivant la forme du message lumineux à afficher.

6. Aéronef (10) selon l'une quelconque des revendications précédentes, **caractérisé en ce que** le moyen de fixation (28) de la feuille électroluminescente (26) est constitué d'un film adhésif (30).

7. Aéronef (10) selon l'une quelconque des revendications précédentes, **caractérisé en ce que** le moyen d'alimentation (38) en électricité est agencé à l'intérieur de l'aéronef (10), et **en ce que** le moyen de raccordement électrique (36a, 36b) de la feuille électroluminescente (26) comporte au moins deux fils électriques qui raccordent électriquement la feuille électroluminescente (26) et le moyen d'alimentation (38) en électricité, et qui passent à travers au moins un trou (40a, 40b) ménagé dans le carénage (16) de l'aéronef (10).

8. Aéronef (10) selon l'une quelconque des revendications précédentes, **caractérisé en ce que** la feuille électroluminescente (26) affiche un message signalétique ou un message publicitaire.

9. Aéronef (10) selon l'une quelconque des revendications précédentes, **caractérisé en ce qu'**il comporte une nacelle (12) de turbomachine, la nacelle (12) étant équipée du dispositif (14) pour l'affichage d'un message lumineux sur le carénage (16) de l'aéronef (10).

## Patentansprüche

1. Luftfahrzeug (10), das eine Vorrichtung (14) zum Anzeigen einer Leuchtmeldung auf der Verkleidung (16) des Luftfahrzeugs (10) umfasst, **dadurch gekennzeichnet, dass** es Folgendes umfasst:
- mindestens ein elektrolumineszierendes Blatt (26), das die Form einer biegsamen Folie, die auf die Verkleidung (16) angedrückt ist, hat,
- ein Mittel zum Befestigen (28) des elektrolumineszierenden Blatts (26) auf der Verkleidung (16),
- ein Mittel zum Versorgen (38) mit Elektrizität des elektrolumineszierenden Blatts (26),
- ein Mittel zum elektrischen Anschließen (36a, 36b) des elektrolumineszierenden Blatts (26) auf dem Mittel zum Versorgen (38) mit Elektrizität, und
- ein Mittel zum Steuern (42) des elektrolumineszierenden Blatts (26) auf einen eingeschalteten Zustand, in dem das elektrolumineszierende Blatt (26) elektrisch versorgt ist und Licht abgibt, oder auf einen ausgeschalteten Zustand, in dem das elektrolumineszierende Blatt (26) nicht in Betrieb ist;
und **dadurch gekennzeichnet, dass** die Verkleidung (16) nacheinander von innerhalb nach außerhalb des Luftfahrzeugs (10) Folgendes umfasst:
- eine Platte (18), die ein Trägersubstrat bildet,
- eine erste Stufe (20) Beschichtung, die aus einer ersten Schicht (20a) Schutzlack, einer zweiten Schicht (20b) Trägerlack und einer dritten Decklackschicht (20c) gebildet ist,
- eine zweite Stufe (22) zum Anzeigen der Meldung, die das elektrolumineszierende Blatt und das dazugehörende Befestigungsmittel umfasst, wobei das elektrolumineszierende Blatt (26) keine Folie zum Schutz vor ultravioletten Strahlen hat;
- eine Außenschutzschicht (24), wobei die Schutzschicht (24) ein durchsichtiger Lack zum Schützen vor den Ultraviolettstrahlen ist, wobei die Schutzschicht (24) auf der Verkleidung (16) des Luftfahrzeugs (10) aufgetragen ist, um das elektrolumineszierende Blatt (26) und die Decklackschicht (20c) abzudecken.

2. Luftfahrzeug (10) nach Anspruch 1, **dadurch gekennzeichnet, dass** eine Aussparung in der Trägerlackschicht (20b) und der Decklackschicht (20c) angelegt ist, zum Beispiel anhand einer Schablone.

3. Luftfahrzeug (10) nach dem vorhergehenden Anspruch, **dadurch gekennzeichnet, dass** die Aussparung die Form der anzuzeigenden Meldung und des (oder der) elektrolumineszierenden Blatts (Blätter) (26) hat, um eine Aufnahme abzugrenzen, in der das elektrolumineszierende Blatt/die elektrolumineszierenden Blätter (26) durch das Befestigungsmittel (28) befestigt ist/sind.

4. Luftfahrzeug (10) nach einem der vorhergehenden Ansprüche, **dadurch gekennzeichnet, dass** das elektrolumineszierende Blatt (26) eine Stärke von etwa 200 Mikrometer aufweist.

5. Luftfahrzeug (10) nach einem der vorhergehenden Ansprüche, **dadurch gekennzeichnet, dass** das elektrolumineszierende Blatt (26) gemäß der Form der anzuzeigenden Leuchtmeldung ausgeschnitten ist.

6. Luftfahrzeug (10) nach einem der vorhergehenden Ansprüche, **dadurch gekennzeichnet, dass** das Befestigungsmittel (28) des elektrolumineszierenden Blatts (26) aus einer Klebefolie (30) besteht.

7. Luftfahrzeug (10) nach einem der vorhergehenden Ansprüche, **dadurch gekennzeichnet, dass** das Mittel zum Versorgen (38) mit Elektrizität im Inneren des Luftfahrzeugs (10) eingerichtet ist, und dass das Mittel zum elektrischen Anschließen (36a, 36b) des elektrolumineszierenden Blatts (26) mindestens zwei elektrische Leiter umfasst, die das elektrolumineszierende Blatt (26) und das Mittel zum Versorgen (38) mit Elektrizität elektrisch anschließen, und die durch mindestens eine Öffnung (40a, 40b), die in der Verkleidung (16) des Luftfahrzeugs (10) angelegt ist, durchgehen.

8. Luftfahrzeug (10) nach einem der vorhergehenden Ansprüche, **dadurch gekennzeichnet, dass** das elektrolumineszierende Blatt (26) eine Beschilderungsmeldung oder eine Werbemeldung anzeigt.

9. Luftfahrzeug (10) nach einem der vorhergehenden Ansprüche, **dadurch gekennzeichnet, dass** es eine Turbomaschinengondel (12) umfasst, wobei die Gondel (12) mit der Vorrichtung (14) zum Anzeigen einer Leuchtmeldung auf der Verkleidung (16) des Luftfahrzeugs (10) ausgestattet ist.

## Claims

1. An aircraft (10) including a device (14) for displaying an illuminated message on the fairing (16) of the aircraft (10), **characterized in that** it includes:
- at least one electroluminescent sheet (26) having the shape of a flexible film, plated on the fairing (16),
- a fixing means (28) of the electroluminescent sheet (26) on the fairing (16),
- a power supply means (38) of the electroluminescent sheet (26),
- an electric connection means (36a, 36b) of the electroluminescent sheet (26) on the power supply means (38), and
- a control means (42) of the electroluminescent sheet (26) in an on-state in which the electroluminescent sheet (26) is electrically supplied and emits light, or in an off-state in which the electroluminescent sheet (26) is inoperative;
and **characterized in that** the fairing (16) includes successively, from the inside to the outside of the aircraft (10):
- a plate (18) forming a support substrate,
- a first coating stage (20) consisting of a first paint layer (20a) for protecting a second support paint layer (20b) and a third finishing paint layer (20c),
- a second stage (22) for displaying the message comprising the electroluminescent sheet and the associated fixing means, the electroluminescent sheet (26) being devoid of a protective film against ultraviolet rays;
- an outside protective layer (24), the protective layer (24) being a transparent protective varnish against ultraviolet rays, the protective layer (24) being applied to the fairing (16) of the aircraft (10) in order to cover the electroluminescent sheet (26) and the finishing paint layer (20c).

2. The aircraft (10) according to claim 1, **characterized in that** a recess is arranged in the support paint layer (20b) and the finishing paint layer (20c), for example by means of a stencil.

3. The aircraft (10) according to the preceding claim, **characterized in that** the recess has the shape of the message to be displayed and of the electroluminescent sheet(s) (26) in order to delimit a housing in which the electroluminescent sheet(s) is (are) fixed by the fixing means (28).

4. The aircraft (10) according to any of the preceding claims, **characterized in that** the electroluminescent sheet (26) has a thickness of about 200 micrometers.

5. The aircraft (10) according to any one of the preceding claims, **characterized in that** the electroluminescent sheet (26) is cut according to the shape of the illuminated message to be displayed.

6. The aircraft (10) according to any one of the preceding claims, **characterized in that** the fixing means (28) of the electroluminescent sheet (26) consists of an adhesive film (30).

7. The aircraft (10) according to any one of the preceding claims, **characterized in that** the power supply means (38) is arranged inside the aircraft (10), and **in that** the electric connection means (36a, 36b) of the electroluminescent sheet (26) includes at least two electric wires which electrically connect the electroluminescent sheet (26) and the power supply means (38), and which pass through at least one hole (40a, 40b) arranged in the fairing (16) of the aircraft (10).

8. The aircraft (10) according to any one of the preceding claims, **characterized in that** the electroluminescent sheet (26) displays a signaling message or an advertising message.

9. The aircraft (10) according to any one of the preceding claims, **characterized in that** it includes a nacelle (12) of a turbojet engine, the nacelle (12) being equipped with the device (14) for displaying an illuminated message on the fairing (16) of the aircraft (10).
